# EUROPEAN PATENT SPECIFICATION

(11) **EP 3 382 970 B1**
(45) Date of publication and mention of the grant of the patent: **18.11.2026**
(21) Application number: 16856782.4
(22) Date of filing: 13.09.2016
(51) Int. Cl.: H04L 27/26

(54) **PILOT SIGNAL TRANSMISSION METHOD AND APPARATUS, AND TRANSMITTING TERMINAL**
PILOTSIGNALÜBERTRAGUNGSVERFAHREN UND -VORRICHTUNG SOWIE ÜBERTRAGUNGSENDGERÄT
PROCÉDÉ ET APPAREIL D'ÉMISSION DE SIGNAL PILOTE ET TERMINAL D'ÉMISSION

(30) Priority: 23.10.2015 CN 201510698036
(43) Date of publication of application: 03.10.2018
(73) Proprietor: ZTE Corporation, Shenzhen, Guangdong 518057 (CN)
(72) Inventor: XIN, Yu, Shenzhen Guangdong 518057 (CN); YU, Guanghui, Shenzhen Guangdong 518057 (CN); CAO, Aijun, Shenzhen Guangdong 518057 (CN); TAHERI, Sohail, Shenzhen Guangdong 518057 (CN); GHORAISHI, Mir, Shenzhen Guangdong 518057 (CN); XIAO, Pei, Shenzhen Guangdong 518057 (CN)
(74) Representative: Aipex B.V.
(86) International application number: PCT/CN2016/098887
(87) International publication number: WO 2017/067349

(56) References cited:
- EP-A2- 2 445 156
- WO-A1-2008/093253
- WO-A1-2011/050643
- WO-A2-2008/007019
- CN-A- 1 832 466
- CN-A- 101 297 512
- CN-A- 104 506 467
- TAHERI SOHAIL ET AL: "Overhead reduced preamble-based channel estimation for MIMO-FBMC systems", 2015 INTERNATIONAL WIRELESS COMMUNICATIONS AND MOBILE COMPUTING CONFERENCE (IWCMC), IEEE, 24 August 2015 (2015-08-24), pages 1435 - 1439, XP033225565, DOI: 10.1109/IWCMC.2015.7289293
- KOFIDIS ELEFTHERIOS ET AL: "Improved interference approximation method for preamble-based channel estimation in FBMC/OQAM", 18TH EUROPEAN SIGNAL PROCESSING CONFERENCE (EUSIPCO-2010), AALBORG, DENMARK, AUGUST 23-27, 2010, IEEE, 29 August 2011 (2011-08-29), pages 1603 - 1607, XP032757222, ISSN: 2076-1465, [retrieved on 20150331]
- MITSUBISHI ELECTRIC ET AL: "Low cost training for transmit antenna selection on the uplink", 3GPP DRAFT; R1-063089, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Riga, Latvia; 20061101, 1 November 2006 (2006-11-01), XP050103548, [retrieved on 20061101]

## Description

### TECHNICAL FIELD

The present invention relates to, but is not limited to, the field of data communications, and more particularly to a pilot signal transmission method and apparatus, and a transmitting terminal.

### BACKGROUND

Long term evolution (LTE) technology is the 4G (fourth Generation) of wireless cellular communication technology. The LTE technology adopts orthogonal frequency division multiplexing (OFDM) technology, in which time-frequency resources constituted by subcarriers and OFDM symbols make up radio physical resources of a LTE system. At present, the OFDM technology has been widely applied in wireless communications. A CP-OFDM system adopting a cyclic prefix (CP) can shorten the multipath delay well, and divides a frequency selective channel into a set of parallel flat channels, which simplifies the channel estimation method well, and achieves a high accuracy in channel estimation. However, the performance of the CP-OFDM system is sensitive to frequency shifts, that is, Doppler shifts, which is mainly due to the large spectrum leakage of the system. This can easily cause inter-carrier interference (ICI). Moreover, the CP also occupies time resources and reduces the spectral efficiency.

Nowadays, companies begin to study the 5G (Fifth Generation) of wireless communication technology, in which filter bank-based multicarrier offset quadrature amplitude modulation (OFDMC) technology may be adopted. In the case where the subcarriers are distributed at equal intervals, the length of a symbol in the FBMC-OQAM is half the length of a symbol in OFDM. The FBMC-OQAM is also called OFDM-OQAM in some documents. The FBMC-OQAM uses a proper pulse shaping function to filter, reducing out-of-band leakage and better countering effects of frequency shifts and Doppler shifts. Moreover, the FBMC-OQAM does not require the use of the CP, which also helps to increase the spectral efficiency.

However, for an actual faded channel, inherent interferences exist between the subcarriers and between the symbols of the FBMC-OQAM system. In particular, there are large interferences between adjacent subcarriers and between adjacent symbols, which will seriously affect the channel estimation performance of a receiving terminal and further affect the demodulation of data. An original channel estimation method of the CP-OFDM system may not be directly used in the FBMC-OQAM system. Accordingly, a pilot frequency of the FBMC-OQAM system needs to be specially designed and a different channel estimation method should be adopted accordingly.

There are several channel estimation methods of the FBMC-OQAM system in the related art. One method is to use null data symbols to separate pilot symbols from data symbols, so as to reduce the interference of the data symbols on the pilot symbols, and further improve the channel estimation performance. However, in such a setting method, the pilot signal overhead is high. Furthermore, in the case of multiple antennas, multiple null data symbols are needed to separate the pilot symbols of each antenna, which further makes the pilot signal overhead high. Moreover, the channel estimation performance is poor in this method. Another method is to use an auxiliary pilot to cancel the interference of surrounding data on pilot data. If the number of auxiliary pilots is small, the power of the auxiliary pilots will be large in order to cancel out the interference. However, large power of the auxiliary pilots will affect the peak-to-average ratio of the signal. On the contrary, if the number of auxiliary pilots is large, it will lead to a high pilot overhead, and the channel estimation performance is poor in such a setting method. Accordingly, it is eager to solve the problem in the related art of providing a good pilot signal design method and a corresponding channel estimation method in the FBMC-OQAM system.

In other FBMC systems, such as a Generalized Frequency Division Multiplexing (GFDM) system, it is also necessary to solve the problem of the pilot signal design method and the corresponding channel estimation method. Accordingly, it is required to propose a good pilot signal design method commonly used for as many systems based on time-frequency physical resources as possible. Further relevant technologies are also known from TAHERI SOHAIL ET AL: "Overhead reduced preamble-based channel estimation for MIMO-FBMC systems", 2015 INTERNATIONAL WIRELESS COMMUNICATIONS AND MOBILE COMPUTING CONFERENCE (IWCMC), IEEE, 24 August 2015 (2015-08-24), pages 1435-1439, XP033225565, KOFIDIS ELEFTHERIOSET ET AL: "Improved interference approximation method for preamble-based channel estimation in FBMC/OQAM", 18TH EUROPEAN SIGNAL PROCESSING CONFERENCE (EUSIPCO-2010), AALBORG, DENMARK, AUGUST 23-27, 2010, IEEE, 29 August 2011 (2011-08-29), pages 1603-1607, XP032757222, EP 2 445 156 A2 (France TELECOM [FR]) 25 April 2012 (2012-04-25) which relates to frame synchronization in an OFDM communication system and WO 2008/007019 A2 (France TELECOM [FR]) 25 April 2012 (2012-04-25) which relates to methods for the transmission and reception of a multicarrier signal comprising a preamble, and corresponding devices and computer program products.

### SUMMARY

Below is an overview of the subject matter detailed herein. This summary is not intended to limit a protection scope of the claims.

Embodiments of the present invention provide a pilot signal transmission method and apparatus, and a transmitting terminal as defined in the attached independent claims, which reduce pilot overhead and improve channel estimation performance. Further improvements are provided in the dependent claims.

Compared with the related art, the technical solution provided by the embodiments of the present invention includes: setting a first pilot signal, a second pilot signal, and a third pilot signal on a same subcarrier; transmitting the first pilot signal, the second pilot signal, and the third pilot signal respectively on three consecutive symbols on the same subcarrier; the first pilot signal, the second pilot signal, and the third pilot signal are all nonzero data; a phase difference between the first pilot signal and the second pilot signal is 90 degrees; a phase difference between the third pilot signal and the second pilot signal is 90 degrees; and a phase difference between the first pilot signal and the third pilot signal is 180 degrees. By means of the above technical solution, the pilot signals are transmitted by adopting three consecutive symbols on the same subcarrier, and the interference of data on the symbols preceding the first symbol and the symbols subsequent to the third symbol on the pilot signal on the second symbol can be isolated. A phase difference between the pilot data element transmitted on the first symbol and the pilot data element transmitted on the second symbol is 90 degrees, and the phase difference of 90 degrees can increase the signal-to-noise ratio of joint demodulation of the pilot signals in the same direction. A phase difference between the pilot data element transmitted on the third symbol and the pilot data element transmitted on the second symbol is 90 degrees, and similarly, the phase difference of 90 degrees can increase the signal-to-noise ratio of joint demodulation of the pilot signals in the same direction. A phase difference between the pilot data element transmitted on the first symbol and the pilot data element transmitted on the third symbol is 180 degrees, and the phase difference of 180 degrees has the following advantages: the pilot signals at two sides can not only increase the signal-to-noise ratio of joint detection of pilot point signals of an intermediate symbol on the same subcarrier in the same direction, but also has the interferences of the pilot signals at two sides on the pilot signals of the intermediate symbol on the adjacent subcarrier be mutually cancelled out. The embodiments of the present invention can save resources for interference separation, thereby reducing the pilot overhead. Moreover, the cancellation of interference can improve the channel estimation performance of a receiving terminal. Accordingly, the solution of the embodiment of the present invention makes it possible to improve the channel estimation performance of the FBMC system or other systems using time frequency resources as physical resources while keeping the pilot overhead low.

Other aspects will be understood upon reading and understanding accompanying drawings and the detailed description.

### BRIEF DESCRIPTION OF DRAWINGS

FIG. 1 is a schematic flow chart of a pilot signal transmission method according to an embodiment of the present invention;
FIG. 2 is a schematic diagram illustrating transmission of pilot signals on consecutive subcarriers in frequency domain according to an embodiment of the present invention;
FIG. 3 is a schematic diagram illustrating transmission of pilot signals on subcarriers distributed at equal frequency intervals in frequency domain according to an embodiment of the present invention;
FIG. 4A and FIG. 4B are schematic diagrams illustrating setting of pilot signals transmitted on subcarriers of two transmitting antennas according to an embodiment of the present invention;
FIG. 5A and FIG. 5B are schematic diagrams illustrating another setting of pilot signals transmitted on subcarriers of two transmitting antennas according to an embodiment of the present invention; and
FIG. 6 is a schematic diagram illustrating a structure of a pilot signal transmission apparatus according to an embodiment of the present invention.

### DETAILED DESCRIPTION

For ease of understanding by those skilled in the art, embodiments of the present invention will be further described below with reference to accompanying drawings. The description below is not intended to limit the protection scope of the present invention. It should be noted that the embodiments in the present application and the implementations thereof may be combined without conflict. A pilot signal transmission method proposed in the embodiment of the present invention may be used in a FBMC system, and may also be used in other systems, for example, a GFDM system.

Transmitting devices on a transmitting terminal include base station, terminal, relay, and transmitting point. This patent refers collectively to these transmitting devices as transmitting node.

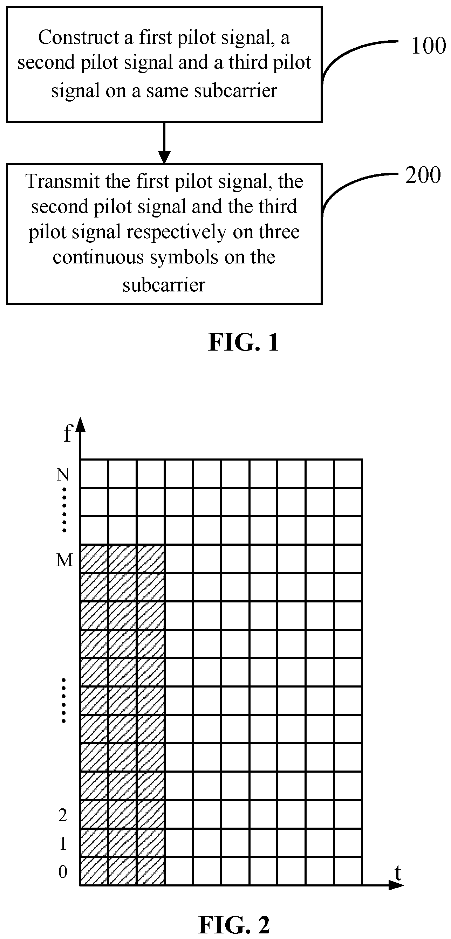

An embodiment of the present invention proposes a pilot signal transmission method for a transmitting node to transmit pilot signals. With reference to FIG. 1, the method includes the steps described below.

In step 100, a first pilot signal, a second pilot signal, and a third pilot signal are set on a same subcarrier;
In step 200, the first pilot signal, the second pilot signal, and the third pilot signal are transmitted respectively on three consecutive symbols on the same subcarrier.

The first pilot signal, the second pilot signal, and the third pilot signal are all nonzero data; a phase difference between the first pilot signal and the second pilot signal is 90 degrees; a phase difference between the third pilot signal and the second pilot signal is 90 degrees; and a phase difference between the first pilot signal and the third pilot signal is 180 degrees.

In the embodiment of the present invention, the pilot signals are transmitted by adopting three consecutive symbols, and the interference of data on the symbols preceding the first symbol and the symbols subsequent to the third symbol on the pilot signals on the second symbol can be isolated. A phase difference between the pilot data element transmitted on the first symbol and the pilot data element transmitted on the second symbol is 90 degrees, and the phase difference of 90 degrees can increase the signal-to-noise ratio of joint demodulation of the pilot signals in the same direction. A phase difference between the pilot data element transmitted on the third symbol and the pilot data element transmitted on the second symbol is 90 degrees, and similarly, the phase difference of 90 degrees can increase the signal-to-noise ratio of joint demodulation of the pilot signals in the same direction. A phase difference between the pilot data element transmitted on the first symbol and the pilot data elements transmitted on the third symbol is 180 degrees, and the phase difference of 180 degrees has the following advantages: the pilot signals at two sides can not only increase the signal-to-noise ratio of joint detection of pilot point signals of an intermediate symbol on the same subcarrier in the same direction, but also has the interferences of the pilot signals at two sides on the pilot signals of the intermediate symbol on the adjacent subcarrier be mutually cancelled out. The pilot data elements transmitted on the three symbols have the same amplitude. As such, the interferences of the pilot signals at two sides on the pilot signals of an intermediate symbol on the adjacent subcarrier can be completely cancelled out, thereby achieving a better signal-to-noise ratio of joint detection of the pilot signals of the three symbols. The embodiments of the present invention can save resources for interference separation since there is no need for additional empty symbols to isolate interference of other data symbols on the pilot symbols, thereby reducing the pilot overhead. Moreover, the cancellation of interference can improve the channel estimation performance of a receiving terminal.

In an embodiment of the present invention, optionally, the pilot signals transmitted on the first symbol and the third symbol are non-zero signals.

Optionally, the pilot signal transmitted on the first symbol and the pilot signal transmitted on the second symbol have the same amplitude and a phase difference of 90 degrees; the pilot signal transmitted on the third symbol and the pilot signal transmitted on the second symbol have the same amplitude and a phase difference of 90 degrees; the pilot signal transmitted on the first symbol and the pilot signal transmitted on the third symbol has a phase difference of 180 degrees.

Below is the description in connection with one example.

Pilot signals are transmitted on the first to the third symbols on a mth subcarrier corresponding to an antenna. The pilot signal transmitted on the first symbol is j*X(m), the pilot signal transmitted on the second symbol is X(m), and the pilot signal transmitted on the second symbol is -j*X(m), where j is a square root of -1, and X(m) is real pilot data on the subcarrier m. For yet another example, the pilot signals respectively transmitted on the first to the third symbols on the mth subcarrier may be -j*X(m), X(m), j*X(m). In addition, X(m) may be real pilot data or complex pilot data or pure imaginary pilot data element. In an embodiment of the present invention, optionally, the pilot signals are transmitted on consecutive subcarriers in frequency domain; or, the pilot signals are transmitted on subcarriers, which are distributed at equal frequency intervals, in frequency domain.

Below is the description in connection with specific examples.

As shown in FIG. 2, it is a schematic diagram illustrating transmission of pilot signals on consecutive subcarriers in frequency domain according to an embodiment of the present invention.

The abscissa represents time t, in which each grid has a length representing a length or interval of each symbol in FBMC-OQAM. The ordinate represents frequency f, in which each grid has a length representing a width or interval of each subcarrier. In time domain, the first three symbols from left to right are pilot symbols, i.e., a first symbol, a second symbol, and a third symbol. In frequency domain, it is assumed that the subcarriers are sequentially numbered 0, 1, 2, ... N from bottom to top, and the subcarriers transmitting the pilot signals are sequentially numbered 0, 1, 2, ... M from bottom to top, where M<=N. In other words, a sequence of subcarriers for transmitting the pilot signals may occupy the entire transmission bandwidth, and may also occupy a part of the transmission bandwidth.

In FIG. 2, the shaded part represents time-frequency resources used for transmitting the pilot signals, where a total of 15 subcarriers are included. The 0th to the 11th subcarriers are used for transmitting the pilot signals. For the subcarriers transmitting the pilot signals, the pilot signals are transmitted in three symbols.

That is, in this example, the description is given by taking N=14 and M=11 as an example. A formula m=A*k+a is used for indicating the subcarriers transmitting the pilot signals. In this example, A=1, a=0, k=0, 1, ... 11 in the formula; where m is a serial number of the subcarrier transmitting the pilot signal.

Therefore, for the subcarrier m transmitting pilot signals, the pilot signals transmitted on three symbols may sequentially be j*X(m), X(m), -j*X(m), where m is a serial number of the subcarrier, m=0, 1, 2, ..., 11. The time-frequency resources of the non-shaded part in FIG. 2 transmit other data.

**Table 1 shows pilot signals transmitted on each subcarrier in the example given in connection with FIG. 2.**

| Serial Number m of Subcarrier | First Symbol | Second Symbol | Third Symbol |
|---|---|---|---|
| 11 | j | 1 | -j |
| 10 | j | 1 | -j |
| 9 | -j | -1 | j |
| 8 | -j | -1 | j |
| 7 | j | 1 | -j |
| 6 | j | 1 | -j |
| 5 | -j | -1 | j |
| 4 | -j | -1 | j |
| 3 | j | 1 | -j |
| 2 | j | 1 | -j |
| 1 | -j | -1 | j |
| 0 | -j | -1 | j |

For different subcarriers, values of X(m) may be set to be different or the same. In this example, the value of X(m) is 1 or -1.

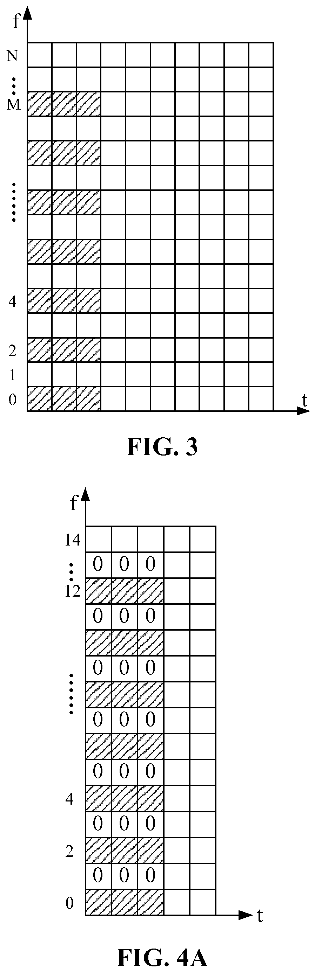

FIG. 3 is a schematic diagram illustrating transmission of pilot signals on subcarriers distributed at equal frequency intervals in frequency domain according to an embodiment of the present invention.

FIG. 3 is a scenario in which pilot signals are transmitted on subcarriers distributed at equal frequency intervals in frequency domain. In time domain, the first three symbols from left to right are pilot symbols, i.e., a first symbol, a second symbol, and a third symbol. In frequency domain, it is assumed that the subcarriers are sequentially numbered 0, 1, 2, ... N from bottom up, and that the subcarrier m transmitting the pilot signals is sequentially numbered 0, 2, 4, ... M from bottom up, where M<=N. FIG. 3 shows an example in which M=12. If the formula m=A*k+a is used, then A=2, a=0, k=0, 1, ... 6 in the formula. Therefore, the pilot signals transmitted on time-frequency resources of the shaded part in FIG. 3 are j*X(m), X(m), and -j*X(m), where m is a serial number of the subcarrier, and m=0, 2, ... 12. The-time frequency resources in the non-shaded part in FIG. 2 transmit other data.

**Table 2 shows pilot signals transmitted on each subcarrier in the example given in connection with FIG. 3.**

| Serial Number m of Subcarrier | First Symbol | Second Symbol | Third Symbol |
|---|---|---|---|
| 12 | j | 1 | -j |
| 11 | | | |
| 10 | j | 1 | -j |
| 9 | | | |
| 8 | -j | -1 | j |
| 7 | | | |
| 6 | j | 1 | -j |
| 5 | | | |
| 4 | -j | -1 | j |
| 3 | | | |
| 2 | j | 1 | -j |
| 1 | | | |
| 0 | -j | -1 | j |

For different subcarriers, values of X(m) may be set to be different or the same. In this example, the value of X(m) is 1 or -1.

In the above example, the description is given by taking subcarriers on one antenna as an example. The description below is given by taking a scenario in which multiple antennas are disposed on a transmitting terminal as an example. In a LTE system, a logical antenna is generally defined by using an antenna port. In the embodiment of the present invention, the number of the antennas is also expressed as the number of the antenna ports, and each antenna is also expressed as each antenna port. For convenience, in the embodiment of the present invention, the antenna and the antenna port are collectively referred to as the antenna, the number of the antennas and the number of the antenna ports are collectively referred to as the number of the antennas.

The pilot signal transmission method provided in the above embodiment may be used on one transmission antenna or on multiple transmission antennas (that is, this method will be employed in each antenna).

In an embodiment of the present invention, optionally, when the number of the antennas disposed in the transmitting terminal is P*Q, and the number of subcarriers corresponding to each antenna is N,
the antennas of the transmitting terminal are divided into Q groups each including P antennas, where P and Q are positive integers,
the pilot signals on the subcarriers corresponding to the antennas of a same group occupy the same symbols in time domain; and
the pilot signals on the subcarriers corresponding to the antennas of different groups occupy partially or completely different symbols in time domain. For example, there are two groups, i.e., a group 1 and a group 2, of antennas. For instance, the group 1 occupies symbols 1, 2 and 3 to transmit the pilot signals, and the group 2 occupies symbols 3, 4 and 5 to transmit the pilot signals.

Optionally, any two of the P antennas of the same group respectively transmit the pilot signals on different subcarriers in frequency domain.

Optionally, pilot signals are set on the jth subcarrier corresponding to the ith antenna of the P antennas of the same group;
where i is an integer greater than 0 and less than or equal to P;
where j=a1*k+b1[i]; where a1 is a positive integer greater than or equal to P, b1[i] is a non-negative integer less than a1 and corresponding to the i^{th} antenna, and values of b1[i] corresponding to different antennas are different; k is a non-negative integer and forms an arithmetic progression; a1, k and b1[i] are set to have a value of j less than or equal to N.

In the embodiment of the present invention, in the same group of P antennas, each of the sequences ml, m2, ... mP of subcarriers is a sequence of subcarriers which are distributed at equal intervals; where ml is a sequence of subcarriers for transmitting pilot signals on an antenna 1, m2 is a sequence of subcarriers for transmitting pilot signals on an antenna 2, and so on, mP is a sequence of subcarriers for transmitting pilot signals on an antenna P. Moreover, the sequences ml, m2, ... mP of the subcarriers constitute a sequence of subcarriers which are continuously distributed. For example, P is 4, ml is [0, 4, 8], m2 is [1, 5, 9], m3 is [2, 6, 10], m4 is [3, 7, 11], and the sequences ml, m2, m3 and m4 of the subcarriers constitute a sequence of subcarriers [0, 1, 2, 3, 4, 5, 6, 7, 8, 9, 10, 11] which are continuously distributed.

Below is the description in connection with specific examples.

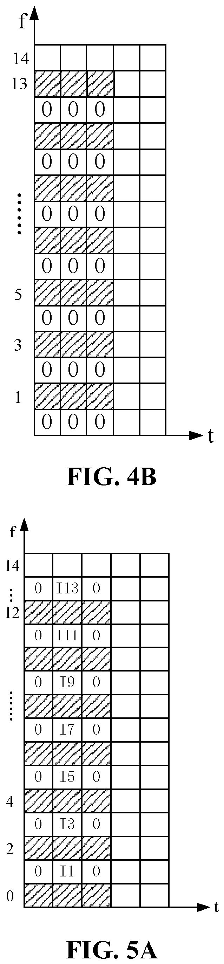

FIG. 4A and 4B are schematic diagrams illustrating setting of pilot signals transmitted on subcarriers of two transmitting antennas according to an embodiment of the present invention.

The description is given by taking an example where the number of transmitting antennas of a transmitting terminal is 2. The sequence m1 of subcarriers, carrying the pilot signals, transmitted on the antenna 1 and the sequence m2 of subcarriers, carrying the pilot signals, transmitted on the antenna 2 are staggered in frequency domain. That is, ml is not identical to m2. The m1 and m2 are expressed by using formulae: ml=a1*k+c1 and m2=a1*k+c2, where a1 is a positive integer greater than 1; c1 and c2 are non-negative integers and less than a1, and c1 is not equal to c2; k is a sequence of integers with a certain length; where the sequence of integers is an arithmetic progression with an equal difference of one.

Optionally, when the number of transmitting antennas of the transmitting terminal is 2, the sequence m1 of subcarriers for transmitting the pilot signals on the antenna 1 is a sequence of subcarriers distributed at equal intervals, and the sequence m2 of subcarriers for transmitting the pilot signals on the antenna 2 is a sequence of subcarriers distributed at equal intervals, and the sequence ml of subcarriers and the sequence m2 of subcarriers constitute a sequence of subcarriers continuously distributed, that is, m1=2*k+d, m2=2*k+d+1, where d=0 or 1, and k is a sequence of integers with a certain length.

Optionally, when the number of the transmitting antennas of the transmitting terminal is 2, the sequence m1 of subcarriers for transmitting the pilot signals on the antenna 1 is a sequence of subcarriers distributed at equal intervals, and the sequence m2 of subcarriers for transmitting the pilot signals on the antenna 2 is a sequence of subcarriers distributed at equal intervals, and when the sequence m1 of subcarriers and the sequence m2 of subcarriers constitute a sequence of subcarriers distributed continuously, signal data, which are transmitted on three symbols the same as symbols for transmitting the pilot signals, on the sequence m1-1 or m1+1 of subcarriers on the antenna 1 are 0, 0, 0, and signal data, which are transmitted on three symbols the same as symbols for transmitting the pilot signals, on the sequence m2-1 or m2+1 of subcarriers on the antenna 2 are 0, 0, 0. The fact that the signal data is 0 indicates that no data is transmitted on the time-frequency resource, or that there is no signal power on the time-frequency resource. The advantage of setting the data element to 0 on a resource corresponding to one antenna is to reduce the interference of the antenna on the pilot signals on the other antenna.

FIG. 4A is a schematic diagram showing distribution of subcarriers for transmitting pilot signals on an antenna 1. FIG. 4B is a schematic diagram showing distribution of subcarriers for transmitting pilot signals on an antenna 2. The sequence m1 of subcarriers carrying the pilot signals transmitted on the antenna 1 is 0, 2, ... 12, and signal data, which are transmitted on three symbols the same as symbols for transmitting the pilot signals, on the sequence m1+1 (i.e., 1, 3, ... 13) of subcarriers on the antenna 1 are 0, 0, 0. The sequence m2 of subcarriers carrying the pilot signals transmitted on the antenna 2 is 1, 3, ... 13, and signal data, which are transmitted on three symbols the same as symbols for transmitting the pilot signals, on the sequence m1-1 (i.e., 0, 2, ... 12) of subcarriers on the antenna 2 are 0, 0, 0.

Optionally, when the number of transmitting antennas of the transmitting terminal is 2, the sequence m1 of subcarriers for transmitting the pilot signals on the antenna 1 is a sequence of subcarriers distributed at equal intervals, and the sequence m2 of subcarriers for transmitting the pilot signals on the antenna 2 is a sequence of subcarriers distributed at equal intervals, and the sequence ml of subcarriers and the sequence m2 of subcarriers constitute a sequence of subcarriers distributed continuously, when pilot signals are transmitted on a subcarrier m1 on the antenna 1, signal data, which are transmitted on three symbols the same as symbols for transmitting the pilot signals, on the sequence m1-1 of subcarriers on the antenna 1 are 0, I(m1-1), 0; and signal data, which are transmitted on three symbols the same as symbols for transmitting the pilot signals, on the sequence m1+1 of subcarriers on the antenna 1 are 0, I(m1+1), 0. The I (m1-1) or I (m1+1) is calculated from X (ml). The advantage of setting a data element to I(m1-1) or I(m1+1) on a resource corresponding to one antenna is to reduce the interference of this antenna on the pilot signals on the other antenna.

Optionally, the I(m1+1) is calculated according to a formula containing X(m1); and/or,
the I(m1-1) is calculated according to a formula containing X (m1);
where the formula containing X(m1) used for calculating the I(m1+1) is:
   $I \left(m1+1\right) = X \left(m1\right) {\left〈g\right〉}_{m 1}^{m 1 + 1} ,$ or
   $I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ,$
where
${\left〈g\right〉}_{m 1}^{m 1 + 1} = \int {g}_{m 1} \left(t\right) {g}_{m 1 + 1}^{∗} \left(t\right) dt ,$ and
${\left〈g\right〉}_{m 1 + 2}^{m 1 + 1} = \int {g}_{m 1 + 2} \left(t\right) {g}_{m 1 + 1}^{∗} \left(t\right) dt ,$
where "*" is a conjugate operation, *g*_{*m*1} is a prototype filter function for the second symbol of the three pilot symbols on the subcarrier m1; *g*_{*m*1+1} is a prototype filter function for the second symbol of the three pilot symbols on the subcarrier m1+1; *g*_{*m*1+2} is a prototype filter function for the second symbol of the three pilot symbols on the subcarrier m1+2;
the formula containing X(m1) used for calculating the I(m1-1) is:
   $I \left(m1-1\right) = - X \left(m1\right) {\left〈g\right〉}_{m 1}^{m 1 - 1} ,$ or
   $I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
where
${\left〈g\right〉}_{m 1}^{m 1 - 1} = \int {g}_{m 1} \left(t\right) {g}_{m 1 - 1}^{∗} \left(t\right) dt ,$ and
${\left〈g\right〉}_{m 1 + 2}^{m 1 - 1} = \int {g}_{m 1 + 2} \left(t\right) {g}_{m 1 - 1}^{∗} \left(t\right) dt ,$
where "*" is a conjugate operation, *g*_{*m*1} is a prototype filter function for the second symbol of the three pilot symbols on the subcarrier m1; *g*_{*m*1-1} is a prototype filter function for the second symbol of the three pilot symbols on the subcarrier m1-1; *g*_{*m*1+2} is a prototype filter function for the second symbol of the three pilot symbols on the subcarrier m1+2.

When there are pilot signals transmitted on the subcarrier m2 on the antenna 2, signal data, which are transmitted on three symbols the same as symbols of transmitting the pilot signals, on the sequence m2-1of subcarriers on the antenna 2 are 0, I(m2-1), 0; signal data transmitted on the sequence m2+1 of subcarriers on the antenna 2 are 0, I(m2+1), 0. The I(m2-1) or I(m2+1) is calculated from X(m2).

The fact that the signal data is 0 indicates that no data is transmitted on the time-frequency resource or that there is no signal power on the time frequency resource. Since the receiving terminal is known data, the signal data 0 may also be referred to as one kind of pilot data, and the signal data I(m1-1) or I(m1+1) or I(m2-1) or I(m2+1) may also be referred to as one kind of pilot data.

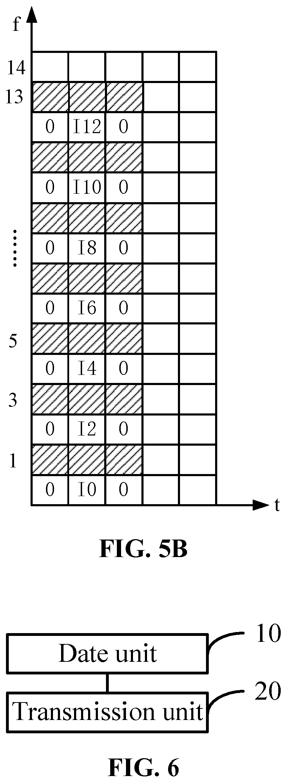

FIG. 5A and 5B are schematic diagrams illustrating another setting of pilot signals transmitted on subcarriers of two transmitting antennas on time-frequency physical resources of an FBMC-OQAM system according to an embodiment of the present invention.

In FIG. 5A, the sequence m1 of subcarriers carrying the pilot signals transmitted on the antenna 1 is 0, 2, ... 12, and signal data, which are transmitted on three symbols the same as symbols for transmitting the pilot signals, on the sequence m1+1 (i.e., 1, 3, ... 13) of subcarriers on the antenna 1 are 0, I(m1+1), 0. In FIG. 5B, the sequence m2 of subcarriers carrying the pilot signals transmitted on the antenna 2 is 1, 3, ... 13, and signal data, which are transmitted on three symbols the same as symbols for transmitting the pilot signals, on the sequence m2-1 (i.e., 0, 2, ... 12) of subcarriers on the antenna 2 are 0, I(m2-1), 0.

I(m1+1) is calculated from X(ml), and I(m2-1) is calculated from X(m2). That is, in FIG. 5A, I1, I3, ... I13 on the resource of the symbol 2 are respectively calculated from X(0), X(2), ... X(12) on a pilot resource; and in FIG. 5B, I0, I2, ... I12 on the resource of the symbol are respectively calculated from X(l), X(3), ... X(13) on the pilot resource.

Based on the concept identical or similar to that in the foregoing embodiment, an embodiment of the present invention further provides a pilot signal transmission apparatus. With reference to FIG. 6, the pilot signal transmission apparatus provided by the embodiment of the present invention includes:
a data unit 10, which is configured to set a first pilot signal, a second pilot signal, and a third pilot signal on a same subcarrier;
a transmission unit 20, which is configured to transmit the first pilot signal, the second pilot signal, and the third pilot signal respectively on three consecutive symbols on the same subcarrier;
the first pilot signal, the second pilot signal, and the third pilot signal are all nonzero data;
a phase difference between the first pilot signal and the second pilot signal is 90 degrees;
a phase difference between the third pilot signal and the second pilot signal is 90 degrees; and
a phase difference between the first pilot signal and the third pilot signal is 180 degrees.

In an embodiment of the present invention, the first pilot signal, the second pilot signal, and the third pilot signal have the same amplitude.

In an embodiment of the present invention, the first pilot signal, the second pilot signal, and the third pilot signal set by the data unit 10 are respectively -j*X(m), X(m), and j*X(m); or
the first pilot signal, the second pilot signal, and the third pilot signal set by the data unit 10 are respectively j*X(m), X(m), and -j*X(m);
where X(m) is real pilot data or complex pilot data or imaginary pilot data.

In an embodiment of the present invention, the pilot signals are transmitted on consecutive subcarriers in frequency domain; or
the pilot signals are transmitted on subcarriers distributed at equal frequency intervals in frequency domain.

In an embodiment of the present invention, the data unit 10 is further configured to set pilot signals transmitted on subcarriers corresponding to each of antennas disposed in a transmitting terminal;
the number of the antennas disposed in the transmitting terminal is P*Q, and the number of the subcarriers corresponding to each antenna is N;
the antennas of the transmitting terminal are divided into Q groups, each of the Q groups includes P antennas, where P and Q are positive integers,
the antennas of a same group each is set to occupy same symbols to transmit the pilot signals; and
any two antennas in different groups are set to occupy partially or completely different symbols in time domain to transmit the pilot signals.

In an embodiment of the present invention, any two of the P antennas of the same group separately transmit the pilot signals on different subcarriers in frequency domain.

In an embodiment of the present invention, in the same group of P antennas, the pilot signals are set on the jth subcarrier corresponding to the ith antenna of the P antennas of the same group;
where i is an integer greater than 0 and less than or equal to P;
where j=a1*k+b1[i]; where a1 is a positive integer greater than or equal to P, b1[i] is a non-negative integer less than a1 and corresponding to the ith antenna, and values of b1[i] corresponding to different antennas are different; k is a non-negative integer and forms an arithmetic progression; a1, k and b1[i] are set to have a value of j less than or equal to N.

In an embodiment of the present invention, the data unit 10 is further configured to: in the P antennas of the same group, when the pilot signals are transmitted on the subcarriers of the P antennas continuously distributed at intervals in frequency domain and when the ith antenna transmits the pilot signals on a subcarrier m1, on three symbols the same as three symbols for transmitting the pilot signals, set signal data transmitted on the subcarrier m1-1 on the ith antenna to 0, I(m1-1), 0; and set signal data transmitted on the subcarrier m1+1 on the ith antenna to 0, I(m1+1), 0; where the I(m1+1) is calculated according to a formula containing X(m1); and/or the I(m1-1) is calculated according to the formula containing X(m1).

In an embodiment of the present invention, the formula containing X(m1) used for calculating the I(m1+1) is:
$I \left(m1+1\right) = X \left(m1\right) {\left〈g\right〉}_{m 1}^{m 1 + 1} ,$ or
$I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ,$
where
${\left〈g\right〉}_{m 1}^{m 1 + 1} = \int {g}_{m 1} \left(t\right) {g}_{m 1 + 1}^{∗} \left(t\right) dt ,$ and
${\left〈g\right〉}_{m 1 + 2}^{m 1 + 1} = \int {g}_{m 1 + 2} \left(t\right) {g}_{m 1 + 1}^{∗} \left(t\right) dt ,$
where "*" is a conjugate operation, *g*_{*m*1} is a filter function for the second symbol of the three pilot symbols on the subcarrier m1; *g*_{*m*1+1} is a filter function for the second symbol of the three pilot symbols on the subcarrier m1+1; *g*_{*m*1-2} is a filter function for the second symbol of the three pilot symbols on the subcarrier m1+2;
the formula containing X(m1) used for calculating the I(m1-1) is:
   $I \left(m1-1\right) = - X \left(m1\right) {\left〈g\right〉}_{m 1}^{m 1 - 1} ,$ or
$I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
where "*" is a conjugate operation, *g*_{*m*1} is a prototype filter function for the second symbol of the three pilot symbols on the subcarrier m1; *g*_{*m*1-1} is a prototype filter function for the second symbol of the three pilot symbols on the subcarrier m1-1; and *g*_{*m*1+2} is a prototype filter function for the second symbol of the three pilot symbols on the subcarrier m1+2.

Based on the concept identical or similar to that of the above-described embodiment, an embodiment of the present invention further provides a transmitting terminal, including any one of the above pilot signal transmission apparatus provided by the embodiments of the present invention.

Receiving devices on a receiving terminal include base station, terminal, relay and the like. These receiving devices are collectively referred to as receiving nodes. The receiving nodes receive the pilot data for channel estimation, and then demodulate the data or determine channel state information. Compared with the related art, the pilot signal transmission method and apparatus provided by the embodiments of the present invention can improve the channel estimation performance of the receiving nodes.

The pilot signal transmission method and apparatus provided by the embodiments of the present invention may be used in FBMC-OQAM or other FBMC systems, or more generally, and may also be used in other multicarrier systems. In other FBMC systems, e.g., a GFDM (Generalized Frequency Division Multiplexing) system, it is also necessary to solve the problem of a pilot signal design. When the length of a symbol of the GFDM system is twice the length of a symbol of the FBMC-OQAM system, the three symbols of transmitting the pilot signals are distributed at intervals of half the length of the symbol of the GFDM system. That is, one pilot symbol is respectively inserted at a position from each of two sides by a length of half the length of the symbol of one pilot symbol n of the GFDM system. Other contents in the pilot signal transmission method and apparatus provided by the embodiments of the present invention are identical or similar to those in the FBMC-OQAM system.

The pilot signal transmission method and apparatus provided by the embodiments of the present invention can not only increase the signal-to-noise ratio of joint detection of pilot point signals, but also cancel the interference between adjacent subcarriers and the interference between the antennas, and can also save physical time-frequency resources for interference separation. Therefore, with the pilot signal transmission method and apparatus provided by the embodiments of the present invention, the channel estimation performance of the FBMC system or other systems using time-frequency resources as physical resources can be improved well, and the pilot overhead is low.

An embodiment of the present invention further provides a computer storage medium. Computer-executable instructions are stored in the computer storage medium. The computer-executable instructions are used for executing the method described in the above embodiments.

A person ordinarily skilled in the art may understand that all or a part of steps in the above method may be implemented by a program to instruct related hardware (for example, a processor), and the program may be stored in a computer-readable storage medium, such as a read-only memory, a magnetic disk, or a compact disk. Alternatively, all or a part of the steps of the above embodiments may also be implemented by using one or more integrated circuits. Correspondingly, each module/unit in the above embodiments may be implemented in the form of hardware, for example, its corresponding function may be realized by an integrated circuit, or each module/unit in the above embodiments may be implemented in the form of a software function module, for example, its corresponding function is realized by a processor to execute a program/instruction stored in a memory. The present invention is not limited to any specific combination of hardware and software.

### INDUSTRIAL APPLICABILITY

The above technical solution can save resources for interference separation, thereby reducing the pilot overhead. Moreover, the cancellation of interference can improve the channel estimation performance of a receiving terminal. Accordingly, the above technical solution makes it possible to improve the channel estimation performance of a FBMC system or other systems using time frequency resources as physical resources while keeping low pilot overhead .

## Claims

1. A pilot signal transmission method, applied to a transmitting terminal in which a plurality of antennas are disposed, **characterized in that**, the method comprises:
for each of the plurality of antennas, setting a first pilot signal, a second pilot signal, and a third pilot signal on three consecutive symbols on each of a plurality of subcarriers that need to transmit pilot signals; and
transmitting the first pilot signal, the second pilot signal, and the third pilot signal on the following time-frequency resources:
for any two antennas in a same group, occupying different subcarriers in frequency domain and the same three consecutive symbols in time domain; and for any two antennas in different groups, the three consecutive symbols occupying partially different symbols in time domain, wherein a middle symbol in the three consecutive symbols occupied for one of the any two antennas in the different groups and a middle symbol in the three consecutive symbols occupied for another of the any two antennas in the different groups are not overlapping, wherein the plurality of antennas disposed in the transmitting terminal are divided into Q groups and each of the Q groups comprises P antennas,
wherein P is a positive integer greater than 1 and Q is a positive integer greater than 1; and
wherein the first pilot signal, the second pilot signal, and the third pilot signal are all nonzero data; a phase difference between the first pilot signal and the second pilot signal is 90 degrees; a phase difference between the third pilot signal and the second pilot signal is 90 degrees; and a phase difference between the first pilot signal and the third pilot signal is 180 degrees;
wherein the first pilot signal, the second pilot signal, and the third pilot signal have a same amplitude.

2. The pilot signal transmission method according to claim 1, wherein
the first pilot signal, the second pilot signal, and the third pilot signal are respectively -j*X(m), X(m), and j *X(m); or,
the first pilot signal, the second pilot signal, and the third pilot signal are respectively j*X(m), X(m), and -j *X(m);
wherein X(m) is real pilot data, or complex pilot data, or imaginary pilot data.

3. The pilot signal transmission method according to claim 1, wherein
the pilot signals are transmitted on consecutive subcarriers in frequency domain; or
the pilot signals are transmitted on subcarriers distributed at equal frequency intervals in frequency domain.

4. The pilot signal transmission method according to claim 1, wherein
the pilot signals are set on a jth subcarrier corresponding to an ith antenna of P antennas of a same group;
wherein i is an integer greater than 0 and less than or equal to P;
wherein j=a1*k+b1[i]; wherein a1 is a positive integer greater than or equal to P, b1[i] is a non-negative integer less than a1 and corresponding to the ith antenna, and values of b1[i] corresponding to different antennas are different; k is a non-negative integer and forms an arithmetic progression.

5. The pilot signal transmission method according to claim 1, wherein
in P antennas of a same group, when the pilot signals are transmitted on the subcarriers of P antennas continuously distributed at intervals in frequency domain and when an ith antenna transmits the pilot signals on a subcarrier m1, on three symbols the same as three symbols for transmitting the pilot signals, signal data transmitted on a subcarrier m1-1 of the ith antenna are set to 0, I(m1-1), 0; signal data transmitted on the subcarrier m1+1 of the ith antenna are set to 0, I(m1+1), 0; wherein the I(m1+1) is calculated according to a formula containing X(m1), and/or the I(m1-1) is calculated according to a formula containing X(m1),
preferably, the formula containing X(m1) used for calculating the I(m1+1) is: $I \left(m1+1\right) = X \left(m1\right) {\left〈g\right〉}_{m 1}^{m 1 + 1} ,$ or $I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ;$
wherein ${\left〈g\right〉}_{m 1}^{m 1 + 1} = \int {g}_{m 1} \left(t\right) {g}_{m 1 + 1}^{∗} \left(t\right) dt ,$ and ${\left〈g\right〉}_{m 1 + 2}^{m 1 + 1} = \int {g}_{m 1 + 2} \left(t\right) {g}_{m 1 + 1}^{∗} \left(t\right) dt ,$
wherein "*" is a conjugate operation, *g*_{*m*1} is a filter function for the second symbol of the three pilot symbols on the subcarrier m1; *g*_{*m*1+1} is a filter function for the second symbol of the three pilot symbols on the subcarrier m1+1; *g*_{*m*1+2} is a filter function for the second symbol of the three pilot symbols on the subcarrier m1+2;
the formula containing X(m1) used for calculating the I(m1-1) is: $I \left(m1-1\right) = - X \left(m1\right) {\left〈g\right〉}_{m 1}^{m 1 - 1} ,$ or $I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
wherein "*" is a conjugate operation, *g*_{*m*1} is a prototype filter function for the second symbol of the three pilot symbols on the subcarrier m1; *gm*₁₋₁ is a prototype filter function for the second symbol of the three pilot symbols on the subcarrier m1-1; and *g*_{*m*1+2} is a prototype filter function for the second symbol of the three pilot symbols on the subcarrier m1+2.

6. A pilot signal transmission apparatus, applied to a transmitting terminal in which a plurality of antennas are disposed, **characterized in that**, the apparatus comprises:
a data unit (10), which is configured to for each of the plurality of antennas, set a first pilot signal, a second pilot signal, and a third pilot signal on three consecutive symbols on each of a plurality of subcarriers that need to transmit pilot signals; and
a transmission unit (20), which is configured to transmit the first pilot signal, the second pilot signal, and the third pilot signal on the following time-frequency resources:
for any two antennas in a same group, occupying different subcarriers in frequency domain and the same three consecutive symbols in time domain; and for any two antennas in different groups, the three consecutive symbols occupying partially different symbols in time domain, wherein a middle symbol in the three consecutive symbols occupied for one of the any two antennas in the different groups and a middle symbol in the three consecutive symbols occupied for another of the any two antennas in the different groups are not overlapping, wherein the plurality of antennas disposed in the transmitting terminal are divided into Q groups and each of the Q groups comprises P antennas,
wherein P is a positive integer greater than 1and Q is a positive integer greater than 1; and
wherein the first pilot signal, the second pilot signal, and the third pilot signal are all nonzero data; a phase difference between the first pilot signal and the second pilot signal is 90 degrees; a phase difference between the third pilot signal and the second pilot signal is 90 degrees; and a phase difference between the first pilot signal and the third pilot signal is 180 degrees;
wherein the first pilot signal, the second pilot signal, and the third pilot signal have a same amplitude.

7. The pilot signal transmission apparatus according to claim 6, wherein
the first pilot signal, the second pilot signal, and the third pilot signal set by the data unit are respectively -j*X(m), X(m), and j *X(m); or
the first pilot signal, the second pilot signal, and the third pilot signal set by the data unit are respectively j *X(m), X(m), and -j *X(m);
wherein X(m) is real pilot data, or complex pilot data, or imaginary pilot data.

8. The pilot signal transmission apparatus according to claim 6, wherein
the transmission unit is configured to transmit the pilot signals on consecutive subcarriers in frequency domain; or
transmit the pilot signals on subcarriers distributed at equal frequency intervals in frequency domain.

9. The pilot signal transmission apparatus according to claim 6, wherein the data unit is configured to transmit the pilot signals on the subcarrier through each of the P antennas of the same group in the following manner:
setting the pilot signals on the jth subcarrier corresponding to the ith antenna of the P antennas of the same group;
wherein i is an integer greater than 0 and less than or equal to P;
wherein j=a1*k+b1[i]; wherein a1 is a positive integer greater than or equal to P, b1[i] is a non-negative integer less than a1 and corresponding to the ith antenna, and values of b1[i] corresponding to different antennas are different; k is a non-negative integer and forms an arithmetic progression.

10. The pilot signal transmission apparatus according to claim 6, wherein
the data unit is further configured to: in P antennas of a same group, when the pilot signals are transmitted on the subcarriers of P antennas continuously distributed at intervals in frequency domain and when an ith antenna transmits the pilot signals on a subcarrier m1, on three symbols the same as three symbols for transmitting the pilot signals, set signal data transmitted on the subcarrier m1-1 on the ith antenna to 0, I(m1-1), 0; set signal data transmitted on the subcarrier m1+1 on the ith antenna to 0, I(m1+1), 0; wherein the I(m1+1) is calculated according to a formula containing X(m1); and/or the I(m1-1) is calculated according to a formula containing X(m1),
preferably, the formula containing X(m1) used for calculating the I(m1+1) is: $I \left(m1+1\right) = X \left(m1\right) {\left〈g\right〉}_{m 1}^{m 1 + 1} ,$ or $I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ;$
wherein ${\left〈g\right〉}_{m 1}^{m 1 + 1} = \int {g}_{m 1} \left(t\right) {g}_{m 1 + 1}^{∗} \left(t\right) dt ,$ and ${\left〈g\right〉}_{m 1 + 2}^{m 1 + 1} = \int {g}_{m 1 + 2} \left(t\right) {g}_{m 1 + 1}^{∗} \left(t\right) dt ,$
wherein "*" is a conjugate operation, *g*_{*m*1} is a filter function for the second symbol of the three pilot symbols on the subcarrier m1; *g*_{*m*1+1} is a filter function for the second symbol of the three pilot symbols on the subcarrier m1+1; *g*_{*m*1+2} is a filter function for the second symbol of the three pilot symbols on the subcarrier m1+2;
the formula containing X(m1) used for calculating the I(m1-1) is: $I \left(m1-1\right) = - X \left(m1\right) {\left〈g\right〉}_{m 1}^{m 1 - 1} ,$ or $I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
wherein "*" is a conjugate operation, *g*_{*m*1} is a prototype filter function for the second symbol of the three pilot symbols on the subcarrier m1; *g*_{*m*1-1} is a prototype filter function for the second symbol of the three pilot symbols on the subcarrier m1-1; and *g*_{*m*1+2} is a prototype filter function for the second symbol of the three pilot symbols on the subcarrier m1+2.

11. A transmitting terminal, **characterized in that**, the transmitting terminal comprises the pilot signal transmission apparatus according to any one of claims 6 to 10.

## Patentansprüche

1. Pilotsignalübertragungsverfahren, angewendet auf ein Übertragungsendgerät, in dem eine Vielzahl von Antennen angeordnet sind, **dadurch gekennzeichnet, dass** das Verfahren Folgendes umfasst:
für jede der Vielzahl von Antennen, Festlegen eines ersten Pilotsignals, eines zweiten Pilotsignals und eines dritten Pilotsignals auf drei aufeinanderfolgenden Symbolen auf jedem der Vielzahl von Hilfsträgern, die Pilotsignale übertragen müssen; und
Übertragen des ersten Pilotsignals, des zweiten Pilotsignals und des dritten Pilotsignals auf den folgenden Zeit-Frequenz-Ressourcen:
für zwei beliebige Antennen in einer gleichen Gruppe, Belegen von unterschiedlichen Hilfsträgern in einer Frequenzdomäne und von gleichen drei aufeinanderfolgenden Symbolen in einer Zeitdomäne; und für zwei beliebige Antennen in unterschiedlichen Gruppen, Belegen, durch die drei aufeinanderfolgenden Symbole, von teilweise unterschiedlichen Symbolen in einer Zeitdomäne, wobei sich ein mittleres Symbol in den drei aufeinanderfolgenden Symbolen, das für eine der zwei beliebigen Antennen in den unterschiedlichen Gruppen belegt ist, und ein mittleres Symbol in den drei aufeinanderfolgenden Antennen für eine weitere der zwei beliebigen Antennen in den unterschiedlichen Gruppen belegt ist, nicht überschneiden, wobei die Vielzahl von Antennen, die in dem Übertragungsendgerät angeordnet sind, in Q Gruppen unterteilt sind und jede der Q Gruppen P Antennen umfasst,
wobei P eine positive ganze Zahl größer als 1 und Q eine positive ganze Zahl größer als 1 ist; und
wobei das erste Pilotsignal, das zweite Pilotsignal und das dritte Pilotsignal alle Daten ungleich Null sind; eine Phasendifferenz zwischen dem ersten Pilotsignal und dem zweiten Pilotsignal 90 Grad ist; eine Phasendifferenz zwischen dem dritten Pilotsignal und dem zweiten Pilotsignal 90 Grad ist; und
eine Phasendifferenz zwischen dem ersten Pilotsignal und dem dritten Pilotsignal 180 Grad ist;
wobei das erste Pilotsignal, das zweite Pilotsignal und das dritte Pilotsignal die gleiche Amplitude aufweisen.

2. Pilotsignalübertragungsverfahren nach Anspruch 1, wobei
das erste Pilotsignal, das zweite Pilotsignal und das dritte Pilotsignal -j*X(m), X(m) beziehungsweise j*X(m) sind; oder
das erste Pilotsignal, das zweite Pilotsignal und das dritte Pilotsignal j*X(m), X(m) beziehungsweise j*X(m) sind;
wobei X(m) reale Pilotdaten oder komplexe Pilotdaten oder imaginäre Pilotdaten sind.

3. Pilotsignalübertragungsverfahren nach Anspruch 1, wobei
die Pilotsignale in einer Frequenzdomäne auf aufeinanderfolgenden Hilfsträgern übertragen werden; oder
die Pilotsignale auf Hilfsträgern übertragen werden, die in gleichen Frequenzintervallen in einer Frequenzdomäne verteilt sind.

4. Pilotsignalübertragungsverfahren nach Anspruch 1, wobei
die Pilotsignale auf einem j-ten Hilfsträger festgelegt werden, der einer i-ten Antenne von P Antennen von einer gleichen Gruppe entspricht;
wobei i eine ganze Zahl größer als 0 und kleiner oder gleich P ist;
wobei j = a1*k + b1[i]; wobei a1 eine positive ganze Zahl ist, die größer oder gleich P ist, b1[i] eine nicht-negative ganze Zahl ist, die kleiner als a1 ist und der i-ten Antenne entspricht, und die Werte von b1[i], die unterschiedlichen Antennen entsprechen, unterschiedlich sind; k eine nicht-negative ganze Zahl ist und eine arithmetische Folge bildet.

5. Pilotsignalübertragungsverfahren nach Anspruch 1, wobei
wobei bei P Antennen von einer gleichen Gruppe, wenn die Pilotsignale auf den Hilfsträgern von P Antennen übertragen werden, die kontinuierlich in Intervallen in der Frequenzdomäne verteilt sind, und wenn eine i-te Antenne die Pilotsignale auf einem Hilfsträger m1 überträgt, auf drei Symbolen, die mit den drei Symbolen zum Übertragen der Pilotsignale übereinstimmen, die auf einem Hilfsträger m1-1 der i-ten Antenne übertragenen Signaldaten auf 0, I(m1-1), 0 festgelegt werden; die auf dem Hilfsträger m1+1 der i-ten Antenne übertragenen Signaldaten auf 0, I(m1+1), 0 festgelegt werden; wobei das I(m1+1) gemäß einer Formel berechnet wird, die X(m1) enthält, und/oder das I(m1-1) gemäß einer Formel berechnet wird, die X(m1) enthält,
vorzugsweise ist die Formel, die X(m1) enthält und zum Berechnen von I(m1+1) verwendet wird: $I \left(m1+1\right) = X \left(m1\right) {\left〈g\right〉}_{m 1}^{m 1 + 1} ,$ oder $I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ;$
wobei ${\left〈g\right〉}_{m 1}^{m 1 + 1} = \int {g}_{m 1} \left(t\right) {g}_{m 1 + 1}^{∗} \left(t\right) dt ,$ und ${\left〈g\right〉}_{m 1 + 2}^{m 1 + 1} = \int {g}_{m 1 + 2} \left(t\right) {g}_{m 1 + 1}^{∗} \left(t\right) dt ,$
wobei "*" eine konjugierte Operation ist, *g*_{*m*1} eine Filterfunktion für das zweite Symbol der drei Pilotsymbole auf dem Hilfsträger m1 ist; *g*_{*m*1+1} eine Filterfunktion für das zweite Symbol der drei Pilotsymbole auf dem Hilfsträger m1+1 ist; *g*_{*m*1+2} eine Filterfunktion für das zweite Symbol der drei Pilotsymbole auf dem Hilfsträger m1+2 ist;
wobei die Formel, die X(m1) enthält und zum Berechnen von I(m1-1) verwendet wird, Folgende ist: $I \left(m1-1\right) = - X \left(m1\right) {\left〈g\right〉}_{m 1}^{m 1 - 1} ,$ oder $I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
wobei "*" eine konjugierte Operation ist, *g*ₘ₁ eine Prototyp-Filterfunktion für das zweite Symbol der drei Pilotsymbole auf dem Hilfsträger m1 ist; *g*ₘ₁₋₁ eine Prototyp-Filterfunktion für das zweite Symbol der drei Pilotsymbole auf dem Hilfsträger m1-1 ist; und *g*ₘ₁₊₂ eine Prototyp-Filterfunktion für das zweite Symbol der drei Pilotsymbole auf dem Hilfsträger m1+2 ist.

6. Pilotsignalübertragungsvorrichtung, angewendet auf ein Übertragungsendgerät, in dem eine Vielzahl von Antennen angeordnet sind, **dadurch gekennzeichnet, dass** die Vorrichtung Folgendes umfasst:
eine Dateneinheit (10), die für jede der Vielzahl von Antennen konfiguriert ist, um ein erstes Pilotsignal, ein zweites Pilotsignal und ein drittes Pilotsignal auf drei aufeinanderfolgenden Symbolen auf jedem der Vielzahl von Hilfsträgern festzulegen, die Pilotsignale übertragen müssen; und
eine Übertragungseinheit (20), die konfiguriert ist, um das erste Pilotsignal, das zweite Pilotsignal und das dritte Pilotsignal auf den folgenden Zeit-Frequenz-Ressourcen zu übertragen:
für zwei beliebige Antennen in einer gleichen Gruppe, Belegen von unterschiedlichen Hilfsträgern in einer Frequenzdomäne und von gleichen drei aufeinanderfolgenden Symbolen in einer Zeitdomäne; und für zwei beliebige Antennen in unterschiedlichen Gruppen, Belegen, durch die drei aufeinanderfolgenden Symbole, von teilweise unterschiedlichen Symbolen in einer Zeitdomäne, wobei sich ein mittleres Symbol in den drei aufeinanderfolgenden Symbolen, das für eine der zwei beliebigen Antennen in den unterschiedlichen Gruppen belegt ist, und ein mittleres Symbol in den drei aufeinanderfolgenden Antennen für eine weitere der zwei beliebigen Antennen in den unterschiedlichen Gruppen belegt ist, nicht überschneiden, wobei die Vielzahl von Antennen, die in dem Übertragungsendgerät angeordnet sind, in Q Gruppen unterteilt sind und jede der Q Gruppen P Antennen umfasst,
wobei P eine positive ganze Zahl größer als 1 und Q eine positive ganze Zahl größer als 1 ist; und
wobei das erste Pilotsignal, das zweite Pilotsignal und das dritte Pilotsignal alle Daten ungleich Null sind; eine Phasendifferenz zwischen dem ersten Pilotsignal und dem zweiten Pilotsignal 90 Grad ist; eine Phasendifferenz zwischen dem dritten Pilotsignal und dem zweiten Pilotsignal 90 Grad ist; und
eine Phasendifferenz zwischen dem ersten Pilotsignal und dem dritten Pilotsignal 180 Grad ist;
wobei das erste Pilotsignal, das zweite Pilotsignal und das dritte Pilotsignal die gleiche Amplitude aufweisen.

7. Pilotsignalübertragungsvorrichtung nach Anspruch 6, wobei
das erste Pilotsignal, das zweite Pilotsignal und das dritte Pilotsignal, die durch die Dateneinheit festgelegt werden, - j*X(m), X(m) beziehungsweise j*X(m) sind; oder
das erste Pilotsignal, das zweite Pilotsignal und das dritte Pilotsignal, die durch die Dateneinheit festgelegt werden, j*X(m), X(m) beziehungsweise j*X(m) sind;
wobei X(m) reale Pilotdaten oder komplexe Pilotdaten oder imaginäre Pilotdaten sind.

8. Pilotsignalübertragungsvorrichtung nach Anspruch 6, wobei
die Übertragungseinheit konfiguriert ist, um die Pilotsignale in einer Frequenzdomäne auf aufeinanderfolgenden Hilfsträgern zu übertragen; oder
die Pilotsignale auf Hilfsträgern zu übertragen, die in gleichen Frequenzintervallen in einer Frequenzdomäne verteilt sind.

9. Pilotsignalübertragungsvorrichtung nach Anspruch 6, wobei die Dateneinheit konfiguriert ist, um die Pilotsignale auf dem Hilfsträger über jede der P Antennen der gleichen Gruppe auf folgende Weise zu übertragen:
Festlegen der Pilotsignale auf dem j-ten Hilfsträger, der der i-ten Antenne der P Antennen der gleichen Gruppe entspricht;
wobei i eine ganze Zahl größer als 0 und kleiner oder gleich P ist;
wobei j = a1*k + b1[i]; wobei a1 eine positive ganze Zahl ist, die größer oder gleich P ist, b1[i] eine nicht-negative ganze Zahl ist, die kleiner als a1 ist und der i-ten Antenne entspricht, und die Werte von b1[i], die unterschiedlichen Antennen entsprechen, unterschiedlich sind; k eine nicht-negative ganze Zahl ist und eine arithmetische Folge bildet.

10. Pilotsignalübertragungsvorrichtung nach Anspruch 6, wobei
die Dateneinheit ferner zu Folgendem konfiguriert ist: bei P Antennen von einer gleichen Gruppe, wenn die Pilotsignale auf den Hilfsträgern von P Antennen übertragen werden, die kontinuierlich in Intervallen in der Frequenzdomäne verteilt sind, und wenn eine i-te Antenne die Pilotsignale auf einem Hilfsträger m1 überträgt, auf drei Symbolen, die mit den drei Symbolen zum Übertragen der Pilotsignale übereinstimmen, Festlegen der auf dem Hilfsträger m1-1 auf der i-ten Antenne übertragenen Signaldaten auf 0, I(m1-1), 0; Festlegen der auf dem Hilfsträger m1+1 auf der i-ten Antenne übertragenen Signaldaten auf 0, I(m1+1), 0; wobei das I(m1+1) gemäß einer Formel berechnet wird, die X(m1) enthält; und/oder das I(m1-1) gemäß einer Formel berechnet wird, die X(m1) enthält,
vorzugsweise ist die Formel, die X(m1) enthält und zum Berechnen von I(m1+1) verwendet wird: $I \left(m1+1\right) = X \left(m1\right) {\left〈g\right〉}_{m 1}^{m 1 + 1} ,$ oder $I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ;$
wobei ${\left〈g\right〉}_{m 1}^{m 1 + 1} = \int {g}_{m 1} \left(t\right) {g}_{m 1 + 1}^{∗} \left(t\right) dt ,$ und ${\left〈g\right〉}_{m 1 + 2}^{m 1 + 1} = \int {g}_{m 1 + 2} \left(t\right) {g}_{m 1 + 1}^{∗} \left(t\right) dt ,$
wobei "*" eine konjugierte Operation ist, *g*_{*m*1} eine Filterfunktion für das zweite Symbol der drei Pilotsymbole auf dem Hilfsträger m1 ist; *g*_{*m*1+1} eine Filterfunktion für das zweite Symbol der drei Pilotsymbole auf dem Hilfsträger m1+1 ist; *g*_{*m*1+2} eine Filterfunktion für das zweite Symbol der drei Pilotsymbole auf dem Hilfsträger m1+2 ist;
wobei die Formel, die X(m1) enthält und zum Berechnen von I(m1-1) verwendet wird, Folgende ist: $I \left(m1-1\right) = - X \left(m1\right) {\left〈g\right〉}_{m 1}^{m 1 - 1} ,$ oder $I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
wobei "*" eine konjugierte Operation ist, *g*_{*m*1} eine Prototyp-Filterfunktion für das zweite Symbol der drei Pilotsymbole auf dem Hilfsträger m1 ist; *g*_{*m*1-1} eine Prototyp-Filterfunktion für das zweite Symbol der drei Pilotsymbole auf dem Hilfsträger m1-1 ist; und *g*_{*m*1+2} eine Prototyp-Filterfunktion für das zweite Symbol der drei Pilotsymbole auf dem Hilfsträger m1+2 ist.

11. Übertragungsendgerät, **dadurch gekennzeichnet, dass** das Übertragungsendgerät die Pilotsignalübertragungsvorrichtung nach einem der Ansprüche 6 bis 10 umfasst.

## Revendications

1. Procédé d'émission de signal pilote, appliqué à un terminal émetteur dans lequel une pluralité d'antennes sont disposées, **caractérisé en ce que** le procédé comprend :
pour chacune des antennes, la définition d'un premier signal pilote, d'un deuxième signal pilote et d'un troisième signal pilote sur trois symboles consécutifs sur chacune d'une pluralité de sous-porteuses qui doivent émettre des signaux pilotes ; et
l'émission du premier signal pilote, du deuxième signal pilote et du troisième signal pilote sur les ressources temps-fréquence suivantes :
pour deux antennes quelconques dans un même groupe, occupant des sous-porteuses différentes dans le domaine fréquentiel et les trois mêmes symboles consécutifs dans le domaine temporel ; et
pour deux antennes quelconques dans des groupes différents, les trois symboles consécutifs occupant des symboles partiellement différents dans le domaine temporel, dans lequel un symbole médian dans les trois symboles consécutifs occupés pour l'une des deux antennes quelconques dans les groupes différents et un symbole médian dans les trois symboles consécutifs occupés pour l'autre des deux antennes quelconques dans les groupes différents ne se chevauchent pas, dans lequel la pluralité d'antennes disposées dans le terminal d'émission sont divisées en Q groupes et chacun des Q groupes comprend P antennes,
dans lequel P est un entier positif supérieur à 1 et Q est un entier positif supérieur à 1 ; et
dans lequel le premier signal pilote, le deuxième signal pilote et le troisième signal pilote sont tous des données non nulles ;
une différence de phase entre le premier signal pilote et le deuxième signal pilote est de 90 degrés ; une différence de phase entre le troisième signal pilote et le deuxième signal pilote est de 90 degrés ; et une différence de phase entre le premier signal pilote et le troisième signal pilote est de 180 degrés ;
dans lequel le premier signal pilote, le deuxième signal pilote et le troisième signal pilote ont une même amplitude.

2. Procédé d'émission de signal pilote selon la revendication 1, dans lequel
le premier signal pilote, le deuxième signal pilote et le troisième signal pilote sont respectivement -j*X(m), X(m) et j*X(m) ; ou,
le premier signal pilote, le deuxième signal pilote et le troisième signal pilote sont respectivement j*X(m), X(m) et - j*X(m) ;
dans lequel X(m) représente des données pilotes réelles, ou des données pilotes complexes, ou des données pilotes imaginaires.

3. Procédé d'émission de signal pilote selon la revendication 1, dans lequel
les signaux pilotes sont émis sur des sous-porteuses consécutives dans le domaine fréquentiel ; ou
les signaux pilotes sont émis sur des sous-porteuses réparties à intervalles de fréquence égaux dans le domaine fréquentiel.

4. Procédé d'émission de signal pilote selon la revendication 1, dans lequel
les signaux pilotes sont définis sur une j-ème sous-porteuse correspondant à une i-ème antenne parmi P antennes d'un même groupe ;
dans lequel i est un entier supérieur à 0 et inférieur ou égal à P ;
dans lequel j=a1*k+b1[i] ; dans lequel a1 est un entier positif supérieur ou égal à P, b1[i] est un entier non négatif inférieur à a1 et correspondant à la i-ème antenne, et les valeurs de b1[i] correspondant à différentes antennes sont différentes ; k est un entier non négatif et forme une progression arithmétique.

5. Procédé d'émission de signal pilote selon la revendication 1, dans lequel
dans P antennes d'un même groupe, lorsque les signaux pilotes sont émis sur les sous-porteuses de P antennes, réparties de manière continue à intervalles réguliers dans le domaine fréquentiel, et lorsqu'une i-ème antenne émet les signaux pilotes sur une sous-porteuse m1, sur trois symboles identiques à trois symboles pour l'émission des signaux pilotes, les données de signal émises sur une sous-porteuse m1-1 de la i-ème antenne sont définies sur 0, I(m1-1), 0 ; les données de signal émises sur la sous-porteuse m1+1 de la i-ème antenne sont définies sur 0, I(m1+1), 0 ; dans lequel I(m1+1) est calculé selon une formule contenant X(m1), et/ou I(m1-1) est calculé selon une formule contenant X(m1),
de préférence, la formule contenant X(m1) utilisée pour calculer I(m1+1) est : $I \left(m1+1\right) = X \left(m1\right) {\left〈g\right〉}_{m 1}^{m 1 + 1} ,$ ou $I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ;$
dans lequel ${\left〈g\right〉}_{m 1}^{m 1 + 1} = \int {g}_{m 1} \left(t\right) {g}_{m 1 + 1}^{∗} \left(t\right) dt ,$ et ${\left〈g\right〉}_{m 1 + 2}^{m 1 + 1} = \int {g}_{m 1 + 2} \left(t\right) {g}_{m 1 + 1}^{∗} \left(t\right) dt ,$
dans lequel « * » est une opération conjuguée, *g*_{*m*1} est une fonction de filtrage pour le deuxième symbole des trois symboles pilotes sur la sous-porteuse m1 ; *g*_{*m*1+1} est une fonction de filtrage pour le deuxième symbole des trois symboles pilotes sur la sous-porteuse m1+1 ; *g*_{*m*1+2} est une fonction de filtrage pour le deuxième symbole des trois symboles pilotes sur la sous-porteuse m1+2 ;
la formule contenant X(m1) utilisée pour calculer I(m1-1) est : $I \left(m1-1\right) = - X \left(m1\right) {\left〈g\right〉}_{m 1}^{m 1 - 1} ,$ ou $I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
dans lequel « * » est une opération conjuguée, *g*ₘ₁ est une fonction de filtrage de prototype pour le deuxième symbole des trois symboles pilotes sur la sous-porteuse m1 ; *g*ₘ₁₋₁ est une fonction de filtrage de prototype pour le deuxième symbole des trois symboles pilotes sur la sous-porteuse m1-1 ; et *g*ₘ₁₊₂ est une fonction de filtrage de prototype pour le deuxième symbole des trois symboles pilotes sur la sous-porteuse m1+2.

6. Appareil d'émission de signal pilote, appliqué à un terminal émetteur dans lequel une pluralité d'antennes sont disposées, **caractérisé en ce que** l'appareil comprend :
une unité de données (10), qui est configurée, pour chacune de la pluralité d'antennes, pour définir un premier signal pilote, un deuxième signal pilote et un troisième signal pilote sur trois symboles consécutifs sur chacune d'une pluralité de sous-porteuses qui doivent émettre des signaux pilotes ; et
une unité d'émission (20), configurée pour émettre le premier signal pilote, le deuxième signal pilote et le troisième signal pilote sur les ressources temps-fréquence suivantes :
pour deux antennes quelconques dans un même groupe, occupant des sous-porteuses différentes dans le domaine fréquentiel et les trois mêmes symboles consécutifs dans le domaine temporel ; et
pour deux antennes quelconques dans des groupes différents, les trois symboles consécutifs occupant des symboles partiellement différents dans le domaine temporel, dans lequel un symbole médian dans les trois symboles consécutifs occupés pour l'une des deux antennes quelconques dans les groupes différents et un symbole médian dans les trois symboles consécutifs occupés pour l'autre des deux antennes quelconques dans les groupes différents ne se chevauchent pas, dans lequel la pluralité d'antennes disposées dans le terminal d'émission sont divisées en Q groupes et chacun des Q groupes comprend P antennes,
dans lequel P est un entier positif supérieur à 1 et Q est un entier positif supérieur à 1 ; et
dans lequel le premier signal pilote, le deuxième signal pilote et le troisième signal pilote sont tous des données non nulles ;
une différence de phase entre le premier signal pilote et le deuxième signal pilote est de 90 degrés ; une différence de phase entre le troisième signal pilote et le deuxième signal pilote est de 90 degrés ; et une différence de phase entre le premier signal pilote et le troisième signal pilote est de 180 degrés ;
dans lequel le premier signal pilote, le deuxième signal pilote et le troisième signal pilote ont une même amplitude.

7. Appareil d'émission de signal pilote selon la revendication 6, dans lequel
le premier signal pilote, le deuxième signal pilote et le troisième signal pilote définis par l'unité de données sont respectivement -j*X(m), X(m) et j*X(m) ; ou
le premier signal pilote, le deuxième signal pilote et le troisième signal pilote définis par l'unité de données sont respectivement j*X(m), X(m) et -j*X(m) ;
dans lequel X(m) représente des données pilotes réelles, ou des données pilotes complexes, ou des données pilotes imaginaires.

8. Appareil d'émission de signal pilote selon la revendication 6, dans lequel
l'unité d'émission est configurée pour émettre les signaux pilotes sur des sous-porteuses consécutives dans le domaine fréquentiel ; ou
émettre les signaux pilotes sur des sous-porteuses réparties à intervalles de fréquence égaux dans le domaine fréquentiel.

9. Appareil d'émission de signal pilote selon la revendication 6, dans lequel l'unité de données est configurée pour émettre les signaux pilotes sur la sous-porteuse à travers chacune des P antennes du même groupe de la manière suivante :
la définition des signaux pilotes sur la j-ème sous-porteuse correspondant à la i-ème antenne des P antennes du même groupe ;
dans lequel i est un entier supérieur à 0 et inférieur ou égal à P ;
dans lequel j=a1*k+b1[i] ; dans lequel a1 est un entier positif supérieur ou égal à P, b1[i] est un entier non négatif inférieur à a1 et correspondant à la i-ème antenne, et les valeurs de b1[i] correspondant à différentes antennes sont différentes ; k est un entier non négatif et forme une progression arithmétique.

10. Appareil d'émission de signal pilote selon la revendication 6, dans lequel
l'unité de données est en outre configurée pour : dans P antennes d'un même groupe, lorsque les signaux pilotes sont émis sur les sous-porteuses de P antennes, réparties de manière continue à intervalles réguliers dans le domaine fréquentiel, et lorsqu'une i-ème antenne émet les signaux pilotes sur une sous-porteuse m1, sur trois symboles identiques à trois symboles pour l'émission des signaux pilotes, définir les données de signal émises sur la sous-porteuse m1-1 de la i-ème antenne sur 0, I(m1-1), 0 ; définir les données de signal émises sur la sous-porteuse m1+1 sur la i-ème antenne sur 0, I(m1+1), 0 ; dans lequel I(m1+1) est calculé selon une formule contenant X(m1) ; et/ou I(m1-1) est calculé selon une formule contenant X(m1),
de préférence, la formule contenant X(m1) utilisée pour calculer I(m1+1) est : $I \left(m1+1\right) = X \left(m1\right) {\left〈g\right〉}_{m 1}^{m 1 + 1} ,$ ou $I \left(m1+1\right) = X \left(m1\right) {\left〈g\right〉}_{m 1}^{m 1 + 1} + X \left(m1+2\right) {\left〈g\right〉}_{m 1 + 2}^{m 1 + 1} ;$
dans lequel ${\left〈g\right〉}_{m 1}^{m 1 + 1} = \int {g}_{m 1} \left(t\right) {g}_{m 1 + 1}^{∗} \left(t\right) dt , et$ et${\left〈g\right〉}_{m 1 + 2}^{m 1 + 1} = \int {g}_{m 1 + 2} \left(t\right) {g}_{m 1 + 1}^{∗} \left(t\right) dt ,$
dans lequel « * » est une opération conjuguée, *g*_{*m*1} est une fonction de filtrage pour le deuxième symbole des trois symboles pilotes sur la sous-porteuse m1 ; *g*_{*m*1+1} est une fonction de filtrage pour le deuxième symbole des trois symboles pilotes sur la sous-porteuse m1+1 ; *g*_{*m*1+2} est une fonction de filtrage pour le deuxième symbole des trois symboles pilotes sur la sous-porteuse m1+2 ;
la formule contenant X(m1) utilisée pour calculer I(m1-1) est : $I \left(m1-1\right) = - X \left(m1\right) {\left〈g\right〉}_{m 1}^{m 1 - 1} ,$ ou $I \left(m1-1\right) = - X \left(m1\right) {\left〈g\right〉}_{m 1}^{m 1 - 1} - X \left(m1+2\right) {\left〈g\right〉}_{m 1 + 2}^{m 1 - 1} ,$
dans lequel « * » est une opération conjuguée, *g*_{*m*1} est une fonction de filtrage de prototype pour le deuxième symbole des trois symboles pilotes sur la sous-porteuse m1 ; *g*_{*m*1-1} est une fonction de filtrage de prototype pour le deuxième symbole des trois symboles pilotes sur la sous-porteuse m1-1 ; et *g*_{*m*1+2} est une fonction de filtrage de prototype pour le deuxième symbole des trois symboles pilotes sur la sous-porteuse m1+2.

11. Terminal d'émission, **caractérisé en ce que** le terminal d'émission comprend l'appareil d'émission de signal pilote selon l'une quelconque des revendications 6 à 10.
